Europäisches Patentamt

European Patent Office

Office européen des brevets

(11) Veröffentlichungsnummer: **0 362 385**
**A1**

## EUROPÄISCHE PATENTANMELDUNG
### veröffentlicht nach Art. 158 Abs. 3 EPÜ

(21) Anmeldenummer: 88906220.4

(51) Int. Cl.5: **F16H 55/08**

(22) Anmeldetag: 29.03.88

(86) Internationale Anmeldenummer:
PCT/SU88/00074

(87) Internationale Veröffentlichungsnummer:
WO 89/09354 (05.10.89 89/24)

(43) Veröffentlichungstag der Anmeldung:
11.04.90 Patentblatt 90/15

(84) Benannte Vertragsstaaten:
AT CH DE FR GB IT LI SE

(71) Anmelder: ROSTOVSKY GOSUDARSTVENNY
UNIVERSITET IMENI M.A. SUSLOVA
ul. Engelsa, 105
Rostov-na-Donu, 344011(SU)

Anmelder: NAUCHNO-PROIZVODSTVENNOE
OBIEDINENIE REDUKTOROSTROENIA
ul. Borschagovskaya 154
Kiev 252056(SU)

Anmelder: IZHEVSKOE PROIZVODSTVENNOE
OBIEDINENIE "REDUKTOR
ul. Kirova, 172
Izhevsk, 426000(SU)

(72) Erfinder: BOIKO, Leonid Sergeevich
ul. Deputatskaya, 6-26
Kiev, 252000(SU)
Erfinder: KOROTKIN, Viktor Iliich
pr. Stachki, 193/2-73
Rostov-na-Donu, 344058(SU)
Erfinder: VERETENNIKOV, Viktor Yakovlevich

ul. Repina, 19-12
Izhevsk, 426035(SU)
Erfinder: ROSLIVKER, Efim Grigorievich
pr. Budennovsky, 72-51
Rostov-na-Donu, 344018(SU)
Erfinder: FEDYAKIN, Roman Vasilievich
ul. Izumrudnaya, 13-1-242
Moscow, 129281(SU)
Erfinder: CHESNOKOV, Viktor Alexeevich
Petrovsko-Razumovskaya alleya, 26-30
Moscow, 125083(SU)
Erfinder: YAKOVLEV, Anatoly Sergeevich
ul. Komsomolskaya, 198-8
Orel, 302016(SU)
Erfinder: KHARITONOV, Jury Danilovich
ul. Sodruzhestva, 37-173
Rostov-na-Donu, 344103(SU)
Erfinder: FEI, Valery Mironovich
ul. Vyborgskaya, 31-37a-33
Kiev, 252056(SU)
Erfinder: GALICHENKO, Emma Nikolaevna
ul. Gogolevskaya, 37/2-55
Kiev, 252053(SU)

(74) Vertreter: Patentanwälte Zellentin & Partner
Zweibrückenstrasse 15
D-8000 München 2(DE)

(54) NOVIKOV-GETRIEBEÜBERTRAGUNG.

(57) Das Novikov-Zahnradgetriebe umfaßt mindestens zwei Zahnradelemente, wobei die Zähne jedes der Elemente einen Zahnkopf, dessen Profil im Normalschnitt durch eine konvexe Kurve (ab) beschrieben ist, einen Zahnfuß und einen sie verbindenden Übergangsabschnitt aufweisen. Der an den Zahnkopf anstoßende Teil (be) des Übergangsabschnittes hat im Normalschnitt ein konvexes Profil mit einem Krümmungsradius ($\rho_2$), der kleiner als der Krümmungsradius ($\rho_1$) des Zahnkopfes ist.

NOVIKOV-ZAHNRADGETRIEBE

Technisches Gebiet

Die vorliegende Erfindung bezieht sich auf das Gebiet des Maschinenbaus und betrifft insbesondere Novikov-Zahnradgetriebe.

Zur Zeit besteht beim praktischen Einsatz von Zahnradgetrieben das Problem der Erhöhung ihres Belastungsvermögens und der Verminderung des Materialaufwands. Dieses Problem wird mittels verschiedener konstruktiver und technologischer Verfahren gelöst, von denen eines die Vervollkommnung der Zahngeometrie ist.

Stand der Technik

Es ist ein Novikov-Zahnradgetriebe bekannt, das mindestens zwei Zahnradelemente umfaßt, wobei die Zähne jedes der Elemente einen Zahnkopf, dessen Profil im Normalschnitt durch eine konvexe Kurve beschrieben ist, einen Zahnfuß und einen sie verbindenden Übergangsabschnitt aufweisen ("Peredachi Novikova tsilindricheskie s dvumya liniami zatseplenia" "Novikov-Stirnradgetriebe mit zwei Eingriffslinien"/, GOST 15023-76, 1976). Der Übergangsabschnitt hat eine Evolventenfläche, die ein verhältnismäßig geringes Spiel zwischen den Oberflächen der in Eingriff stehenden Zähne im Wälzflächenbereich der Zahnradelemente bedingt.

In diesen Zahnradgetrieben können zur Erhöhung der Wälzfestigkeit nur solche Zähne verwendet werden, die eine verhältnismäßig geringe Härte der zusammenwirkenden Oberflächen besitzen.

Für hochharte Zähne ist der Einsatz dieses Zahnradgetriebes unerwünscht, weil wegen des kleinen Spiels der Übergangsabschnitt verhältnismäßig schnell in Funktion tritt und durch geringe Wälzfestigkeit einer fortschreitenden Ausbröcklung im Wälzflächenbereich der Zahnrädelemente ausgesetzt ist. Außerdem ist die Bruchfestigkeit des Zahnes durch eine unzureichende Zahnfußdicke begrenzt.

Es ist weiterhin ein Novikov-Zahnradgetriebe bekannt, das mindestens zwei Zahnradelemente umfaßt, wobei die Zähne jedes der Elemente einen Zahnkopf, dessen Profil im Normalschnitt durch eine konvexe Kurve beschrieben ist, einen Zahnfuß und einen sie verbindenden Abschnitt aufweisen (SU, A, 735855). Der Übergangsabschnitt hat im Normalschnitt ein konkaves Profil, wodurch beim Einsatz von Zahnradelementen mit hochharten Zähnen ein erforderliches Spiel im Wälzflächenbereich der Zahnradelemente sichergestellt wird.

Bei diesen Zähnen sind die Bereiche des Fuß- und des Kopfprofils in bezug auf die Symmetrieachse derart versetzt ausgebildet, daß die Fußdicke wesentlich größer ist als die Kopfdicke, wodurch sich die Bruchfestigkeit des Zahnfußes und des Zahnes im ganzen erhöht.

Eine weitere Erhöhung des Belastungsvermögens des Zahnes wird jedoch durch eine unzureichende Bruchfestigkeit seines Kopfes behindert.

Der Erfindung liegt die Aufgabe zugrunde, ein Novikov-Zahnradgetriebe mit einer derartigen konstruktiven Ausführung der Zähne zu schaffen, durch die die Bruchfestigkeit des Zahnkopfes und das Belastungsvermögen jedes Zahnes im ganzen unter Beibehaltung des erforderlichen Spiels zwischen den in Eingriff kommenden Zahnflächen im Übergangsabschnitt verhältnismäßig erhöht werden können.

Offenbarung der Erfindung

Die gestellte Aufgabe wird dadurch gelöst, daß bei einem Novikov-Zahnradgetriebe, das mindestens zwei Zahnradelemente umfaßt, wobei die Zähne jedes der Elemente einen Zahnkopf, dessen Profil im Normalschnitt durch eine konvexe Kurve beschrieben ist, einen Zahnfuß und einen sie verbindenden Übergangsabschnitt aufweisen, erfindungsgemäß der an den Zahnkopf anstoßende Teil des Übergangsabschnitts im Normalschnitt ein konvexes Profil mit einem Krümmungsradius, der kleiner als der Krümmungsradius des Zahnkopfes ist, besitzt.

Die Ausführung eines Teils des Übergangsabschnittes gemäß der Erfindung gestattet es, die Dicke des gefährdeten Querschnitts des Zahnkopfes zu vergrößern und somit seine Bruchfestigkeit zu erhöhen, wobei das erforderliche Spiel zwischen den in Eingriff kommenden Zahnflächen im Wälzflächenbereich der Zahnradelemente beibehalten werden kann.

Beschreibung

Nachstehend wird die Beschreibung eines konkreten Ausführungsbeispiels für die vorliegende Erfindung unter Hinweisen auf beigefügte Zeichnungen angeführt.

Es zeigt:

Fig. 1 den Eingriff der Zahnradelemente im Stirnschnitt;

Fig. 2 einen Zahn eines der Zahnradelemente;

Fig. 3 das Zahnprofil im Normalschnitt;

Fig. 4 bis 6 Ausschnitte des erfindungsgemäßen Novikov-Zahnradgetriebes in verschiedenen Eingriffsphasen.

Ausführungsform der Erfindung

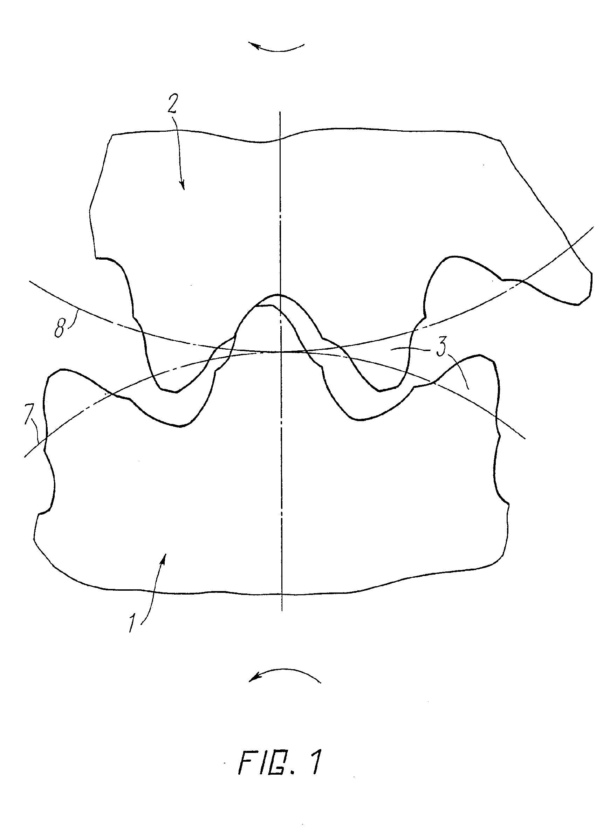

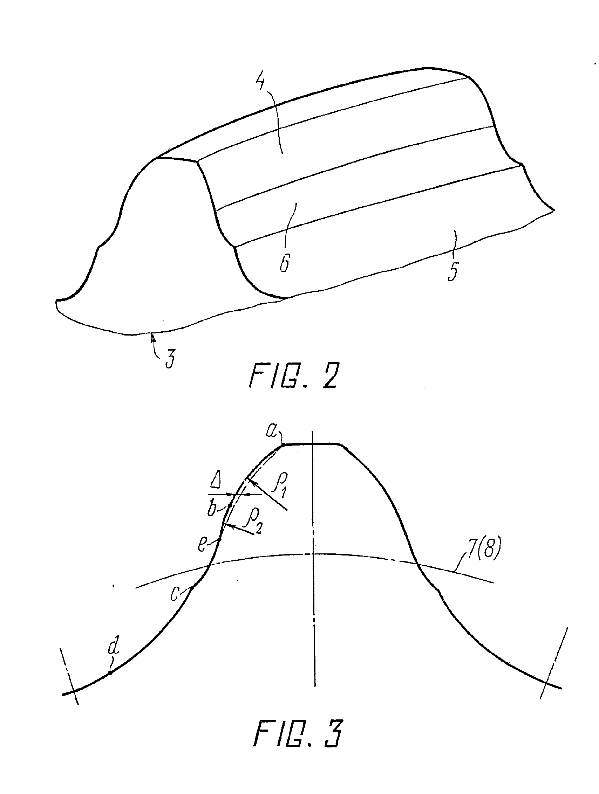

Das Novikov-Zahnradgetriebe umfaßt mindestens zwei Zahnradelemente 1 und 2 (Fig. 1). Die Zähne 3 jedes der Elemente 1,2 enthalten einen Zahnkopf 4 (Fig. 2), einen Zahnfuß 5 und einen sie verbindenden Übergangsabschnitt 6.

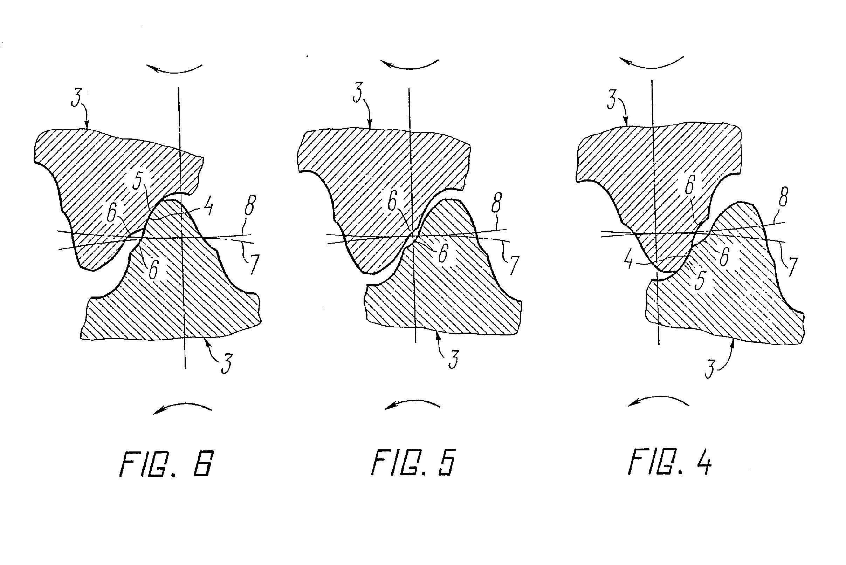

Der Zahnkopf 4 weist im Normalschnitt des Zahnes 3 ein Profil auf, das durch eine konvexe Kurve ab (Fig. 3), die im allgemeinen Fall einen veränderlichen Krümmungsradius $\rho_1$ hat, beschrieben ist.

Der Zahnfuß 5 (Fig. 2) weist ein Profil auf, das durch eine konkave Kurve cd (Fig. 3) beschrieben ist.

Der Übergangsabschnitt 6 (Fig. 2) weist ein Profil bc (Fig. 3) auf. Den Teil des Übergangsabschnittes 6 (Fig. 2), der an den Zahnkopf 4 anstößt, weist ein Profil auf, das durch eine konvexe Kurve be (Fig. 3) beschrieben ist. Die konvexe Kurve be hat im allgemeinen Fall einen veränderlichen Krümmungsradius $\rho_2$, der immer kleiner als der Krümmungsradius $\rho_1$ ist. Ausgehend davon, daß $\rho_2 < \rho_1$ ist, vergrößert sich die Dicke des Zahnkopfes 4 (Fig. 2) um den Betrag $2\Delta$ (Fig. 3) im Vergleich zum Prototyp, der in der Zeichnung mit einer gestrichelten Linie angedeutet ist. Dies führt zur Erhöhung der Bruchfestigkeit des Zahnkopfes 4 (Fig. 2) und des Zahnes 3 im ganzen, dabei bleibt im Wälzflächenbereich 7,8 (Fig. 1) der Zahnradelemente 1,2 das erforderliche Spiel zwischen den Oberflächen der Übergangsabschnitte 6 der in Eingriff stehenden Zähne 3 in allen in Fig. 4 bis 6 gezeigten Eingriffsphasen erhalten. Dadurch kann man Zähne in hochharter Ausführung bei dem erfindungsgemäßen Novikov-Zahnradgetriebe einsetzen.

Die Übertragung des Drehmomentes vom Zahnradelement 1
(Fig. 1) zum Zahnradelement 2 geschieht folgenderweise.

Das antreibende Zahnradelement 1 dreht sich entgegen
dem Uhrzeigersinn. Im beliebigen in Betracht genommenen
Stirnschnitt kommt der Zahnfuß 5 (Fig. 4) des Zahnes 3 des
antreibenden Zahnradelementes 1 (Fig. 1) zuerst mit dem
Kopf 4 (Fig. 4) des Zahnes 3 des getriebenen Zahnradelementes 2 (Fig. 1) in Eingriff.

Dann passieren die paarigen Zähne 3 (Fig. 5) eine Zwischenstellung, wo das Spiel zwischen den Übergangsabschnit-
ten 6 im Wälzflächenbereich 7, 8 minimal ist.

Im weiteren kommt der Zahnkopf 4 (Fig. 6) des Zahnes
3 mit dem Zahnfuß 5 des Zahnes 3 des paarigen Zahnradelementes 2 (Fig. 1) in Eingriff. Auf diese Weise erhält das
getriebene Zahnradelement 2 die Drehung im Uhrzeigersinn.

Dadurch, daß die Zahnköpfe 4 (Fig. 4 bis 6) eine um
den Betrag $2\Delta$ (Fig. 3) vergrößerte Dicke besitzen, sind
die in ihnen entstehenden Spannungen kleiner als in den
Zahnköpfen des Prototyps, wodurch das zu übertragende Drehmoment erhöht werden kann.

Das erfindungsgemäß ausgeführte Novikov-Zahnradgetriebe erlaubt es, unter Beibehaltung der Abmessungen und
der Masse des Getriebes die zu übertragende Belastung zu
erhöhen oder bei vorgegebener Belastung den Materialaufwand des Getriebes im Vergleich zum bisherigen Stand der
Technik zu senken.

Gewerbliche Verwertbarkeit

Am zweckmäßigsten ist das erfindungsgemäß vorgeschlagene Zahnradgetriebe in Untersetzungsgetrieben, die im allgemeinen Maschinenbau zum Einsatz kommen, sowie im Fahr-
zeug- und Schwermaschinenbau anzuwenden.

PATENTANSPRUCH

Novikov-Zahnradgetriebe, das mindestens zwei Zahnradelemente (1,2) umfaßt, wobei die Zähne (3) jedes der Elemente einen Zahnkopf (4), dessen Profil im Normalschnitt durch eine konvexe Kurve (ab) beschrieben ist, einen Zahnfuß (5) und einen sie verbindenden Übergangsabschnitt (6) aufweisen, dadurch g e k e n n z e i c h n e t, daß der an den Zahnkopf (4) anstoßende Teil (be) des Übergangsabschnittes (6) im Normalschnitt ein konvexes Profil mit einem Krümmungsradius ($\rho_2$) hat der kleiner als der Krümmungsradius ($\rho_1'$) des Zahnkopfes (4) ist.

FIG. 1

FIG. 2

FIG. 3

FIG. 4

FIG. 5

FIG. 6

# INTERNATIONAL SEARCH REPORT

International Application No PCT/SU 88/00074

## I. CLASSIFICATION OF SUBJECT MATTER (if several classification symbols apply, indicate all) [6]

According to International Patent Classification (IPC) or to both National Classification and IPC

IPC[4] F 16 H 55/08

## II. FIELDS SEARCHED

Minimum Documentation Searched [7]

| Classification System | Classification Symbols |
|---|---|
| IPC[4] | F 16 H 55/08 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | SU, A1, 240428, (E.G. Roslivker et al.), 04 August 1969 (04.08.69) | 1 |
| A | SU, A1, 1075041, (Rostovsky gosudarstvenny universitet) 23 February 1984 (23.02.84) | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 21 November 1988 (21.11.88) | 28 December 1988 (28.12.88) |

| International Searching Authority | Signature of Authorized Officer |
|---|---|
| ISA/SU | |

Form PCT/ISA/210 (second sheet) (January 1985)